# EUROPÄISCHE PATENTSCHRIFT

(11) **EP 1 605 159 B1**
(45) Veröffentlichungstag und Bekanntmachung des Hinweises auf die Patenterteilung: **02.04.2008**
(21) Anmeldenummer: 05103052.6
(22) Anmeldetag: 18.04.2005
(51) Int. Cl.: F02M 61/20, F16F 1/02

(54) **Kraftstoffeinspritzventil**
Fuel injector
Injecteur de carburant

(30) Priorität: 09.06.2004 DE 102004028209
(43) Veröffentlichungstag der Anmeldung: 14.12.2005
(73) Patentinhaber: ROBERT BOSCH GMBH, 70442 Stuttgart (DE)
(72) Erfinder: Uhlmann, Dietmar, 71404, Korb (DE)

(56) Entgegenhaltungen:
- EP-A- 1 519 072
- WO-A-00/08353
- WO-A-20/04097208
- WO-A-20/04109818
- DE-A1- 10 140 196
- DE-A1- 10 213 382

## Beschreibung

### Stand der Technik

Die Erfindung geht aus von einem Kraftstoffeinspritzventil nach der Gattung des Patentanspruchs 1.

Ein solches Kraftstoffeinspritzventil ist beispielsweise durch die DE 102 13 382 A1 bekannt geworden.

Das aus DE 102 13 382 A1 bekannte Kraftstoffeinspritzventil weist als Federelement eine in sich geschlossene zylindrische Federhülse auf, die in mehreren Radialebenen jeweils zwei Aussparungen aufweist, so dass die Federhülse in Axialrichtung elastisch verformbar ist. Die Aussparungen haben alle die gleiche Form bzw. Geometrie. Die Federhülse besteht in einer ersten Variante aus zwei Hülsenhälften, die miteinander verschweißt sind. Jede Hülsenhälfte wird aus einer ebenen Platine hergestellt, die nach Ausstanzen der Aussparungen in eine Halbzylinderform gerollt wird. Allerdings müssen bei dieser Variante zwei Hülsenhälften gefertigt werden, die dann aufwändig wieder miteinander verbunden werden. Bei einer anderen Variante wird die Federhülse zwar durch Tiefziehen aus einem Stück hergestellt, jedoch ist hier das nachträgliche Ausbilden der Aussparungen mittels Lasers sehr aufwändig.

### Vorteile der Erfindung

Das erfindungsgemäße Kraftstoffeinspritzventil für Brennkraftmaschinen mit den kennzeichnenden Merkmalen des Patentanspruchs 1 hat demgegenüber den Vorteil, dass die offene Federhülse aus einem Stück und ohne Schweißnähte, Schweißperlen und Kerbwirkung hergestellt werden kann. Durch die Form der randnahen Aussparungen kann die axiale Elastizität der Federhülse im Bereich ihrer Stoßkanten insbesondere so eingestellt werden, dass die Federhülse entlang ihres Umfangs nahezu die gleiche Steifigkeit wie eine in sich geschlossene Federhülse aufweist, d.h. nahezu querkraftfrei ist.

Weitere Vorteile und vorteilhafte Ausgestaltungen des Gegenstands der Erfindung sind der Beschreibung, der Zeichnung und den Ansprüchen entnehmbar.

### Zeichnungen

Ausführungsbeispiele des erfindungsgemäßen Kraftstoffeinspritzventils sind in den Zeichnungen dargestellt und in der nachfolgenden Beschreibung näher erläutert. Es zeigen:
- Fig. 1: eine erste Ausführungsform einer offenen Federhülse;

- Fig. 2: die Abwicklung der in Fig. 1 gezeigten Federhülse und den zugehörigen berechneten Kraftverlauf unter axialer Drucklast als Funktion der Umfangsposition der Federhülse;
- Fig. 3: eine vergrößerte Detailansicht der abgewickelten Federhülse gemäß III in Fig. 2;
- Fig. 4: eine zweite Ausführungsform einer offenen Federhülse in abgewickelter Darstellung und den zugehörigen berechneten Kraftverlauf unter axialer Drucklast als Funktion der Umfangsposition der Federhülse;
- Fig. 5: eine dritte Ausführungsform einer offenen Federhülse in abgewickelter Darstellung und den zugehörigen berechneten Kraftverlauf unter axialer Drucklast als Funktion der Umfangsposition der Federhülse;
- Fig. 6: einen Längsschnitt durch ein erstes erfindungsgemäßes Kraftstoffeinspritzventil mit einer offenen Federhülse; und
- Fig. 7: einen Längsschnitt durch ein zweites erfindungsgemäßes Kraftstoffeinspritzventil mit zwei offenen Federhülsen.

### Beschreibung der Ausführungsbeispiele

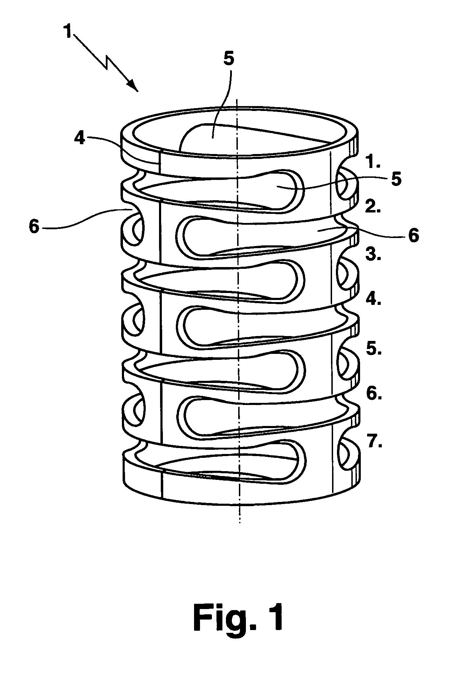

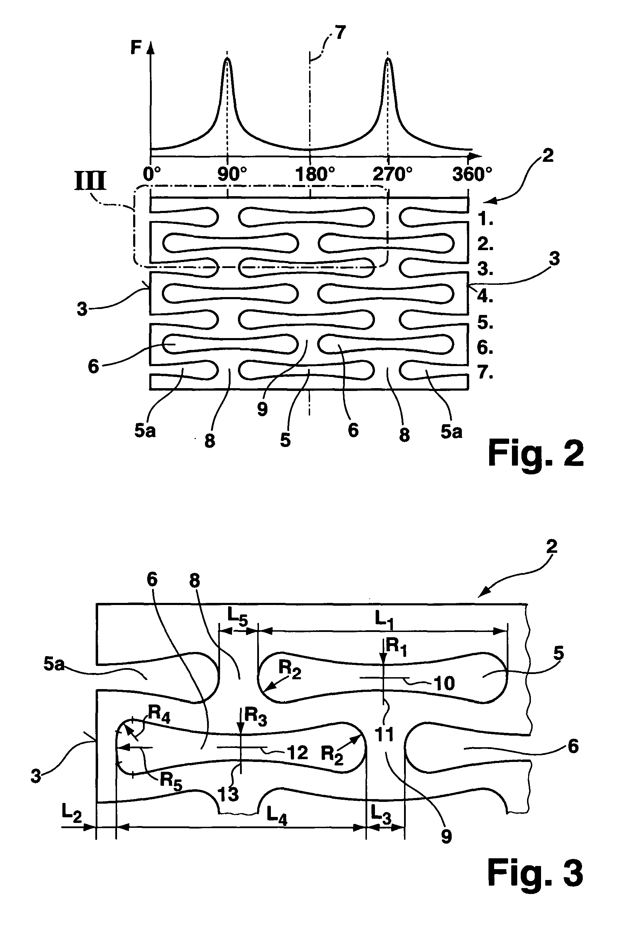

Die in **Fig. 1** gezeigte Federhülse **1** ist durch eine einzige in die Hülsenform gerollte Platine **2** (**Fig. 2**) gebildet, deren beide Platinenränder **3** in der Hülsenform aneinander unverbunden anstoßen und die offene Stoßnaht **4** bilden. Die Federhülse 1 weist in sieben Radialebenen jeweils zwei Aussparungen **5, 6** auf, welche in die Platine 2 gelasert oder gestanzt sind. Die Aussparungen 5, 6 sind als in Umfangsrichtung der Hülse verlaufende Querschlitze mit tailliertem Mittelbereich und gerundeten Enden ausgebildet.

Wie in Fig. 2 genauer gezeigt, ist die Platine 2 symmetrisch zu ihrer axialen Mittelachse **7,** d.h. zur 180°-Umfangsposition der Federhülse 1. Die 1. (oberste), 3., 5. und 7. (unterste) Radialebene der Platine 2 sind identisch ausgebildet und weisen eine mittlere Aussparung 5 und zwei jeweils zum Platinenrand 3 seitlich offene Aussparungshälften **5a** auf, die sich in der Hülsenform zu einer gemeinsamen Aussparung 5 ergänzen. Die 2., 4. und 6. Radialebene weist jeweils zwei Aussparungen 6 auf, die zum Platinenrand 3 hin geschlossen sind. Die Aussparungen 5 und die zwei Aussparungshälften 5a einer Radialebene sind über Stege **8** bei den Umfangspositionen 90° und 270° und die zwei Aussparungen 6 einer Radialebene durch einen Steg **9** bei der Umfangsposition 180° getrennt, so dass die Aussparungen einer Radialebene jeweils zwischen zwei Aussparungen der benachbarten Radialebene angeordnet sind. Wie die in Fig. 2 ebenfalls gezeigte rechnersimulierte Lastverteilung **F** unter axialer Drucklast zeigt, hat die Federhülse **1** jeweils ein Lastmaximum (Tragsäule) bei 90° und 270° und ein Lastminimum bei 180° bzw. 0°/360°. Für die Lastverteilung an den Stirnflächen der Federhülse 1 sind die Position (und die Anzahl) der Stege in der 1. (obersten) und 7. (untersten) Radialebene sowie die Aussparungsgeometrie der unter bzw. über den Stegen der obersten und untersten Radialebene angeordneten Aussparungen relevant.

Wie in **Fig. 3** gezeigt, sind die Formen der Aussparungen 5 bzw. ihrer Aussparungshälften 5a identisch sowie jeweils symmetrisch bezüglich ihrer Längsachse **10** und ihrer axialen Mittelachse **11.** Die Geometrie der Aussparungen 5 wird definiert durch die Radien **R₁, R₂** und die Länge **L₁.** Die Steglänge zwischen zwei Aussparungen 5 beträgt **L₅.** Die Formen der Aussparungen 6 sind symmetrisch bezüglich ihrer Längsachse **12,** aber asymmetrisch bezüglich ihrer axialen Mittelachse **13.** Die Geometrie der Aussparungen 6 wird definiert durch die Radien **R₂, R₃, R₄, R₅** und die Länge **L₄.** Der Abstand der Aussparung 6 zum Platinenrand 3 beträgt **L₂** und der Stegabstand zwischen zwei Aussparungen 6 **L₃.** Der Radius R₅ ist größer als der Radius R₂, wodurch sich das Spannungsniveau zum Stoß bzw. zur Stoßnaht 4 der Federhülse 1 hin reduziert. Diese asymmetrische Aussparungsgeometrie ist erforderlich, damit die in Fig. 2 gezeigten Lastmaxima bezüglich 90° und 270° symmetrisch sind. Da die Traganteile bei 90° und 270° (Bereiche der Stege 8) identisch sind, ist die Federhülse querkraftfrei. Bei Umfangsposition 0° bzw. 360° wird nur eine sehr geringe Druckkraft übertragen. Die 1. und letzte (hier: 7.) Radialebene müssen gleich sein, wodurch sich eine ungerade Anzahl von Radialebenen ergibt. Die Gesamtanzahl der Radialebenen kann variiert werden und bestimmt die Federrate der Federhülse 1. Die Federrate kann zusätzlich durch den Abstand der Radialebenen, die Steglängen L₃, L₅ und die Wanddicke beeinflusst werden. Im gezeigten Ausführungsbeispiel betragen bei einer Gesamthöhe der Platine 2 von 9,3 mm, einer Platinendicke von 0,3 mm und einem Abstand der Radialebenen von 2,35 mm die Radien R₁ = 11,5 mm, R₂ = 0,525 mm, R₃ = 10,5 mm, R₄ = 0,32 mm, R₅ = 0,8 mm und die Längen L₁ = 6,547 mm, L₂ = 0,3 mm, L₃ = 0,6 mm, L₄ = 6,39 mm, L₅ = 0,6 mm.

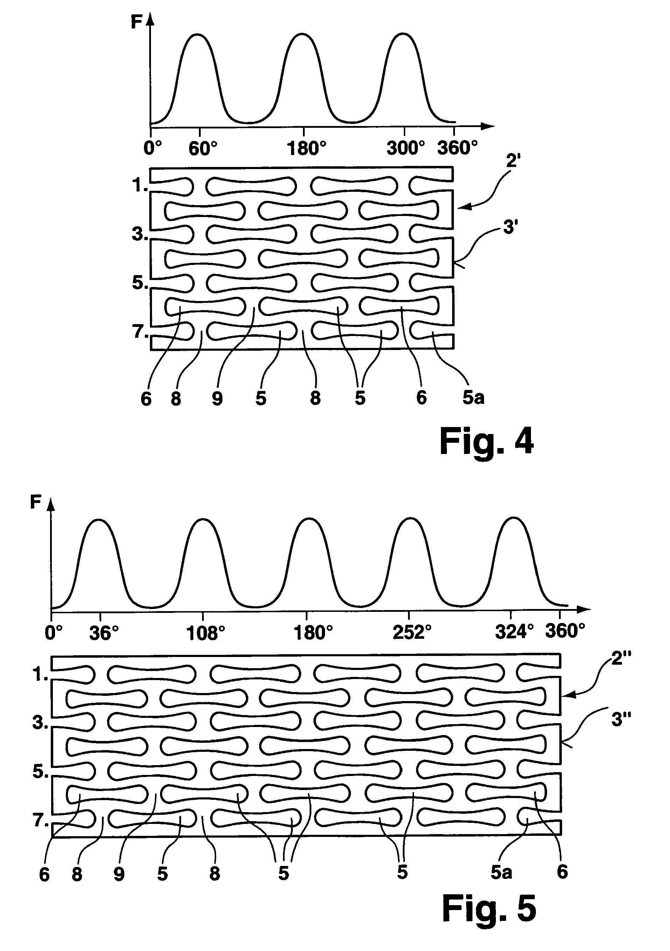

Von der Platine 2 unterscheidet sich die in **Fig. 4** gezeigte Platine **2'** dadurch, dass die 1., 3., 5. und 7., d.h. die ungeraden Radialebenen zwei Aussparungen 5 und zwei zum Platinenrand **3'** offene Aussparungshälften 5a und die geraden Radialebenen in der Mitte eine randferne Aussparung 5 und seitlich je eine randnahe Aussparung 6 aufweisen. Aufgrund dieser asymmetrischen Aussparungsgeometrie an den Umfangspositionen 60° und 300° sind die Traganteile an den Umfangspositionen 60°, 180° und 300° gleich hoch, wie die ebenfalls dargestellte rechnersimulierte Lastverteilung F zeigt. Ohne die Geometrieänderung würden die Traganteile bei 60° und 300° nur ca. 70% des Traganteils bei 180° betragt. Durch diese gleich hohen Traganteile ist die Querkraftfreiheit der offenen Federhülse 1 gewährleistet.

Bei nur zwei Aussparungen über den Umfang der Federhülse 1 (Fig. 2) hat die geänderte Geometrie der Aussparungen 6 nur eine Funktion (1.Funktion), nämlich das hohe Spannungsniveau im Radienbereich der Aussparungen abzusenken. Bei drei oder mehr Aussparungen über den Umfang (Fig. 4) kann zusätzlich (2.Funktion) über die Länge L₄ der Aussparung 6 gezielt die Höhe der Lastmaxima, im Falle von drei Aussparungen also bei 60° und 300°, eingestellt werden.

Von der Platine 2' unterscheidet sich die in **Fig. 5** gezeigte Platine **2"** dadurch, dass die ungeraden Radialebenen vier Aussparungen 5 und zwei zum Platinenrand **3"** offene Aussparungshälften 5a und die geraden Radialebenen drei randferne Aussparung 5 und seitlich je eine randnahe Aussparung 6 aufweisen. Aufgrund dieser asymmetrischen Aussparungsgeometrie an den Umfangspositionen 36° und 324° sind die Traganteile an den Umfangspositionen 36°, 108°, 180°, 252° und 324° gleich hoch, wie die ebenfalls dargestellte Lastverteilung F zeigt. Durch diese gleich hohen Traganteile ist die Querkraftfreiheit der offenen Federhülse 1 gewährleistet.

Abhängig von der Anzahl der Aussparungen in Umfangsrichtung ändert sich die Lastverteilung zwischen den beiden Stirnflächen der Federhülse 1. Mit zunehmender Anzahl der Tragsäulen nimmt die Kraft pro Säule entsprechend ab, und die Kraftverteilung über den Umfang wird homogener.

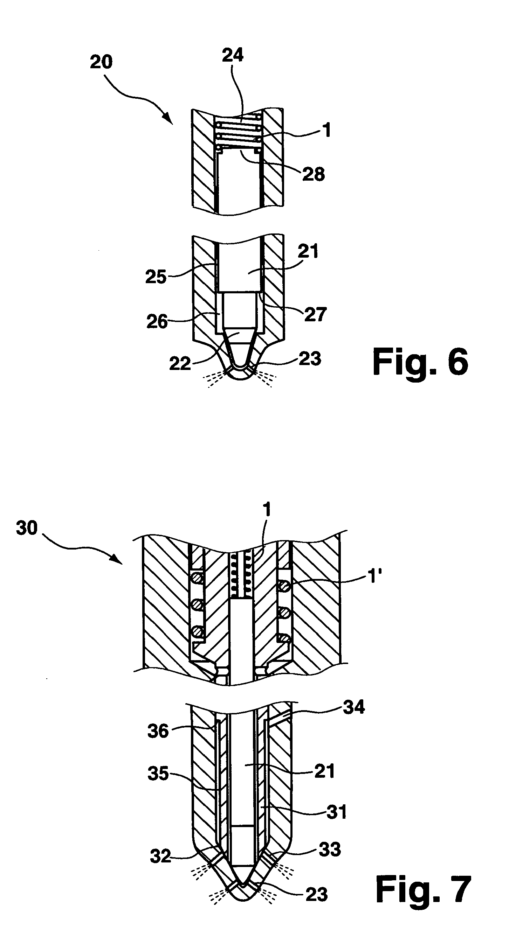

In **Fig. 6** ist die Einspritzdüse **20** eines Kraftstoffeinspritzventils gezeigt, die in den Brennraum einer Brennkraftmaschine ragt. In einer axialen Führungsbohrung der Einspritzdüse **20** ist eine Ventilnadel **21** mit einer konischen Ventildichtfläche **22** verschiebbar geführt, welche hydraulisch und durch die offene Federhülse 1 (schematisch als Schraubenfeder angedeutet) gegen eine konische Ventilsitzfläche der Einspritzdüse 20 gedrückt wird und die dort vorgesehenen Einspritzöffnungen **23** verschließt. Die Ventilnadel 21 begrenzt mit ihrer dem Brennraum abgewandten Stirnseite einen hydraulischen Steuerraum **24,** in dem die Federhülse 1 angeordnet und gehäuseseitig abgestützt ist. Eine Zulaufleitung (nicht gezeigt) mündet in einen zwischen Führungsbohrung und Ventilnadel 21 verlaufenden Ringspalt **25,** der über einen Ringraum **26** bis zur Ventilsitzfläche führt. Die Ventilnadel 21 hat im Ringraum 26 eine Druckschulter **27,** an welcher der im Ringraum 26 herrschende Druck an der Ventilnadel 21 im Öffnungssinn angreift, während der im Steuerraum 24 herrschende Steuerdruck an der Ventilnadel 21 in Schließrichtung angreift. Wenn der im Ringraum 26 herrschende Druck ausreicht, die Ventilnadel 21 gegen die Wirkung der Federhülse 1 und des im Steuerraum 24 herrschenden Steuerdrucks aufzusteuern, erfolgt die Einspritzung mit dem im Ringraum 26 herrschenden Kraftstoffdruck. Die Ventilnadel 21 hat auf ihrer dem Brennraum abgewandten Stirnseite einen Führungsansatz **28,** auf den die offene Federhülse 1 aufgesteckt ist. Dadurch wird eine Desaxierung von Federhülse 1 und Ventilnadel 21 verhindert.

Von der Einspritzdüse 20 unterscheidet sich die in **Fig. 7** gezeigte Kraftstoffeinspritzdüse **30** darin, dass die Ventilnadel 21 in einer zusätzlichen Ventilhülse **31** verschiebbar geführt ist. Die in einer axialen Führungsbohrung verschiebbar geführte Ventilhülse 31 hat eine konische Ventildichtfläche **32** und ist durch eine zweite offene Federhülse **1'** (schematisch als Schraubenfeder angedeutet) gegen eine zweite konische Ventilsitzfläche der Einspritzdüse 30 gedrückt, wo sie dort vorgesehene zweite Einspritzöffnungen **33** verschließt. Das andere Ende der Federhülse 1' ist gehäuseseitig abgestützt. Eine Zulaufleitung **34** mündet in einen zwischen Führungsbohrung und Ventilhülse 31 verlaufenden Ringspalt **35,** der bis zur zweiten Ventilsitzfläche führt. Die Ventilhülse 31 hat im Bereich der Zulaufleitung 34 eine Druckschulter **36,** an welcher der über die Zuleitung 34 zugeführte Kraftstoff im Öffnungssinn an der Ventilhülse 31 angreift. Wenn der an der Druckschulter 36 angreifende Druck ausreicht, die Ventilhülse 31 gegen die Wirkung der Federhülse 1' aufzusteuern, erfolgt die Einspritzung mit dem im Ringspalt 35 herrschenden Kraftstoffdruck. Ventilnadel 21 und Ventilhülse 31 sind miteinander nicht gekoppelt, so dass die Einspritzung wahlweise mit dem im Ringraum 26 oder im Ringspalt 35 herrschenden Kraftstoffdruck erfolgen kann.

Die Federhülse 1 für die Ventilnadel 21 hat einen Innendurchmesser von 1,6 mm, eine Wanddicke von 0,15 mm, eine axiale Länge von 9,3 mm und 19 Radialebenen mit je zwei Aussparungen 5 bzw. 6. Die Federhülse 1' für die Ventilhülse 31 hat einen Innendurchmesser von 4,15 mm, eine Wanddicke von 0,3 mm, eine axiale Länge von 9,3 mm und 7 Radialebenen mit je zwei Aussparungen 5 bzw. 6.

## Patentansprüche

1. Kraftstoffeinspritzventil für Brennkraftmaschinen, mit mindestens einem Ventilglied (21; 31), das durch seine Bewegung entgegen der elastischen Kraft einer in Axialrichtung verformbaren zylindrischen Federhülse (1; 1') die Kraftstoffzufuhr zum Brennraum der Brennkraftmaschine steuert, wobei die Federhülse (1; 1') in mehreren Radialebenen jeweils mindestens zwei Aussparungen (5, 5a, 6) aufweist,
**dadurch gekennzeichnet,**
**dass** die Federhülse (1; 1') durch eine einzige in die Hülsenform gerollte Platine (2; 2'; 2") gebildet ist, deren beide Platinenränder (3, 3', 3") aneinander unverbunden anstoßen, dass zumindest in einer Radialebene die beiden randnahen Aussparungen (6) zum Platinenrand (3) hin geschlossen sind und dass sich die Form einer zum Platinenrand (3, 3', 3") hin geschlossenen randnahen Aussparungen (6) von der Form einer randfernen Aussparungen (5) unterscheidet.

2. Kraftstoffeinspritzventil nach Anspruch 1, **dadurch gekennzeichnet, dass** die beiden randnahen Aussparungen (5a, 6) der Radialebenen abwechselnd zum Platinenrand (3, 3', 3") hin geschlossen oder offen sind.

3. Kraftstoffeinspritzventil nach Anspruch 1 oder 2, **dadurch gekennzeichnet, dass** alle randfernen Aussparungen (5) die identische Form aufweisen.

4. Kraftstoffeinspritzventil nach einem der vorhergehenden Ansprüche, **dadurch gekennzeichnet, dass** die Aussparungen der einen Radialebene jeweils zwischen zwei Aussparungen der benachbarten Radialebene angeordnet sind.

5. Kraftstoffeinspritzventil nach einem der vorhergehenden Ansprüche, **dadurch gekennzeichnet, dass** die Form der zum Platinenrand (3, 3', 3") hin geschlossenen randnahen Aussparung (6) bezüglich ihrer Mittelachse (13) asymmetrisch ist.

6. Kraftstoffeinspritzventil nach einem der vorhergehenden Ansprüche, **dadurch gekennzeichnet, dass** die Aussparungen (5, 5a, 6) als in Umfangsrichtung der Federhülse (1) verlaufende Radialschlitze mit tailliertem Mittelbereich und gerundeten Enden ausgebildet sind.

7. Kraftstoffeinspritzventil nach Anspruch 6, **dadurch gekennzeichnet, dass** das randseitige gerundete Ende der zum Platinenrand (3, 3', 3") hin geschlossenen randnahen Aussparung (6) weniger gekrümmt als das randferne gerundete Ende ist.

8. Kraftstoffeinspritzventil nach einem der vorhergehenden Ansprüche, **dadurch gekennzeichnet, dass** der Abstand (L₂) zwischen Platinenrand (3, 3', 3") und der zum Platinenrand (3, 3', 3") hin geschlossenen randnahen Aussparung (6) kleiner als der Abstand (L₃) zwischen der zum Platinenrand (3, 3', 3") hin geschlossenen randnahen Aussparung (6) und der benachbarten Aussparung (5, 6) ist.

9. Kraftstoffeinspritzventil nach einem der vorhergehenden Ansprüche, **dadurch gekennzeichnet, dass** die Länge (L₄) der zum Platinenrand (3, 3', 3") hin geschlossenen randnahen Aussparung (6) kleiner als die Länge (L₁) der randfernen Aussparung (5, 6) ist.

10. Kraftstoffeinspritzventil nach einem der vorhergehenden Ansprüche, **dadurch gekennzeichnet, dass** die beiden randnahen Aussparungen (5a) der obersten und untersten Radialebene jeweils zum Platinenrand (3, 3', 3") hin offen sind.

11. Kraftstoffeinspritzventil nach einem der vorhergehenden Ansprüche, **dadurch gekennzeichnet, dass** die Federhülse (1) mit ihrem einen Ende auf einen Führungsansatz (28) des Ventilglieds (21) aufgesteckt ist.

## Claims

1. Fuel injection valve for internal combustion engines, having at least one valve element (21; 31) which, by means of its movement counter to the elastic force of a cylindrical spring sleeve (1; 1') which is deformable in the axial direction, controls the fuel supply to the combustion chamber of the internal combustion engine, with the spring sleeve (1; 1') having in each case at least two cutouts (5, 5a, 6) in a plurality of radial planes,
**characterized**
**in that** the spring sleeve (1; 1') is formed by a single blank (2, 2', 2") which is rolled into the sleeve shape and the two blank edges (3, 3', 3'') of which abut against one another in an unconnected fashion, in that, at least in one radial plane, the two cutouts (6) which are close to the edge are closed off in the direction of the blank edge (3), and in that the shape of one of the cutouts (6), which is close to the edge and is closed off in the direction of the blank edge (3, 3', 3''), differs from the shape of one of the cutouts (5) which is remote from the edge.

2. Fuel injection valve according to Claim 1, **characterized in that** the two cutouts (5a, 6), which are close to the edge, of the radial planes are alternately closed off or open in the direction of the blank edge (3, 3', 3").

3. Fuel injection valve according to Claim 1 or 2, **characterized in that** all the cutouts (5) which are remote from the edge have an identical shape.

4. Fuel injection valve according to one of the preceding claims, **characterized in that** the cutouts of the one radial plane are in each case arranged between two cutouts of the adjacent radial plane.

5. Fuel injection valve according to one of the preceding claims, **characterized in that** the shape of the cutout (6), which is close to the edge and is closed off in the direction of the blank edge (3, 3', 3"), is asymmetrical with respect to its central axis (13).

6. Fuel injection valve according to one of the preceding claims, **characterized in that** the cutouts (5, 5a, 6) are embodied as radial slots which run in the peripheral direction of the spring sleeve (1) and which have a waisted central region and rounded ends.

7. Fuel injection valve according to Claim 6, **characterized in that** the edge-side rounded end of the cutout (6), which is close to the edge and is closed off in the direction of the blank edge (3, 3', 3"), is less curved than the rounded end which is remote from the edge.

8. Fuel injection valve according to one of the preceding claims, **characterized in that** the spacing (L₂) between the blank edge (3, 3', 3") and the cutout (6), which is close to the edge and is closed off in the direction of the blank edge (3, 3', 3"), is smaller than the spacing (L₃) between the cutout (6), which is close to the edge and is closed off in the direction of the blank edge (3, 3', 3"), and the adjacent cutout (5, 6).

9. Fuel injection valve according to one of the preceding claims, **characterized in that** the length (L₄) of the cutout (6), which is close to the edge and is closed off in the direction of the blank edge (3, 3', 3''), is smaller than the length (L₁) of the cutout (5, 6) which is remote from the edge.

10. Fuel injection valve according to one of the preceding claims, **characterized in that** the two cutouts (5a), which are close to the edge, of the uppermost and lowermost radial planes are in each case open in the direction of the blank edge (3, 3', 3").

11. Fuel injection valve according to one of the preceding claims, **characterized in that** the spring sleeve (1) is plugged with its one end onto a guide extension (28) of the valve element (21).

## Revendications

1. Injecteur de carburant pour des moteurs à combustion interne comportant au moins une aiguille d'injecteur (21 ; 31) commandant par son mouvement contre la force élastique d'un manchon à ressort (1 ; 1') cylindrique déformable dans la direction axiale, l'alimentation en carburant de la chambre de combustion du moteur à combustion interne,
le manchon à ressort (1, 1') ayant dans plusieurs plans radiaux au moins chaque fois deux découpes (5, 5a, 6),
**caractérisé en ce que**
le manchon à ressort (1 ; 1') est formé par une seule platine (2 ; 2' ; 2") roulée suivant une forme de manchon, dont les deux bords de platine (3 ; 3' ; 3") s'appliquent l'un contre l'autre de manière non liée,
au moins dans l'un des plans radiaux, les deux découpes (6) proches du bord sont fermées en direction du bord de platine (3) et
la forme d'une découpe (6) proche du bord, fermée vers le bord de platine (3, 3', 3"), est différente de la forme d'une découpe (5) éloignée du bord.

2. Injecteur de carburant selon la revendication 1,
**caractérisé en ce que**
les deux découpes (5a, 6) proches du bord dans le plan radial, sont alternativement fermées ou ouvertes vers le bord de platine (3, 3', 3").

3. Injecteur de carburant selon la revendication 1 ou 2,
**caractérisé en ce que**
toutes les découpes (5) éloignées du bord ont une forme identique.

4. Injecteur de carburant selon l'une des revendications précédentes,
**caractérisé en ce que**
les découpes de l'un des plans radiaux sont prévues chaque fois entre deux découpes du plan radial voisin.

5. Injecteur de carburant selon l'une des revendications précédentes,
**caractérisé en ce que**
la forme de la découpe (6) proche du bord, fermée vers le bord de platine (3, 3', 3") est asymétrique par rapport à son axe médian (13).

6. Injecteur de carburant selon l'une des revendications précédentes,
**caractérisé en ce que**
les découpes (5, 5a, 6) sont réalisées sous la forme de fentes radiales dirigées dans la direction périphérique du manchon à ressort (1), avec une zone médiane rétrécie et des extrémités arrondies.

7. Injecteur de carburant selon la revendication 6,
**caractérisé en ce que**
l'extrémité arrondie côté du bord de la découpe (6) proche du bord, fermée vers le bord de platine (3, 3', 3") est moins courbée que l'extrémité arrondie éloignée du bord.

8. Injecteur de carburant selon l'une des revendications précédentes,
**caractérisé en ce que**
la distance (L₂) entre le bord de platine (3, 3', 3") et la découpe (6) proche du bord, fermée vers le bord de platine (3, 3', 3") est inférieure à la distance (L₃) comprise entre la découpe (6) proche du bord, fermée vers le bord de platine (3, 3', 3") et la découpe voisine (5, 6).

9. Injecteur de carburant selon l'une des revendications précédentes,
**caractérisé en ce que**
la longueur (L₄) de la découpe (6) proche du bord, fermée vers le bord de platine (3, 3', 3") est inférieure à la longueur (L₁) de la découpe (5, 6) éloignée du bord.

10. Injecteur de carburant selon l'une des revendications précédentes,
**caractérisé en ce que**
les deux découpes (5a) proches du bord du plan radial le plus haut et du plan radial le plus bas sont chaque fois ouvertes vers le bord de platine (3, 3', 3").

11. Injecteur de carburant selon l'une des revendications précédentes,
**caractérisé en ce que**
le manchon à ressort (1) est emmanché par une extrémité sur un prolongement de guidage (28) de l'aiguille d'injecteur (21).
